# FASCICULE DE BREVET EUROPEEN

(11) **EP 4 339 006 B1**
(45) Date de publication et mention de la délivrance du brevet: **28.01.2026**
(21) Numéro de dépôt: 23198213.3
(22) Date de dépôt: 19.09.2023
(51) Int. Cl.: B60L 3/00, B60L 9/00, B60L 15/20, B60L 15/38, B60L 15/42, B61C 3/00, B61C 9/38, B61C 15/14, B61L 3/00, B61C 3/02, B61C 7/04, B61D 1/00, B61L 15/00

(54) **VÉHICULE FERROVIAIRE ET PROCÉDÉ DE COMMANDE ASSOCIÉ**
SCHIENENFAHRZEUG UND STEUERUNGSVERFAHREN DAFÜR
RAILWAY VEHICLE AND CONTROL METHOD THEREFOR

(30) Priorité: 19.09.2022 FR 2209424
(43) Date de publication de la demande: 20.03.2024
(73) Titulaire: ALSTOM Holdings, 93400 Saint-Ouen-sur-Seine (FR)
(72) Inventeur: HEIDET, Arnaud, 90000 BELFORT (FR); JEANBLANC, Patrick, 90300 SERMAMAGNY (FR); GIRAUDON, Gilles, 90000 BELFORT (FR)
(74) Mandataire: Plasseraud IP

(56) Documents cités:
- EP-A1- 2 960 122
- EP-A1- 3 473 485
- EP-A1- 3 838 652
- EP-A2- 2 650 186
- US-A1- 2018 361 878

## Description

La présente invention concerne un véhicule ferroviaire comprenant au moins une voiture motrice, chaque voiture motrice comprenant au moins deux lignes de traction, chaque ligne de traction comprenant au moins un essieu moteur et un moteur respectifs, le véhicule comprenant aussi un système de commande du véhicule, chaque ligne de traction présentant au moins un mode actif de fonctionnement, dans lequel l'essieu moteur est entrainé en rotation par le moteur en fonction d'une puissance fournie par le moteur, et un mode inactif de fonctionnement, dans lequel le moteur n'entraine pas l'essieu en rotation.

Il est connu des véhicules ferroviaires comprenant au moins une voiture motrice, telle qu'une locomotive, présentant deux modes d'alimentation des lignes de traction : caténaire/diesel, caténaire/batterie et diesel/batterie.

De plus, la traction de tels véhicules ferroviaires peut être assurée par plusieurs voitures motrices, au lieu d'une seule. On dira par exemple qu'elles sont en « unité multiple » si la commande est assurée depuis un seul poste de conduite. Outre les véhicules en double traction, il est fréquent de trouver des véhicules ferroviaires ayant trois, quatre, voire cinq motrices. Les voitures motrices complémentaires peuvent être ajoutées à la suite immédiate de la voiture motrice de tête, en queue du véhicule ferroviaire constitué ou même au milieu de la rame.

Dans le mode d'alimentation batterie de tels véhicules, la capacité des batteries ne permet pas une grande autonomie (quelques dizaines de kilomètres). Cette capacité n'est en tout cas pas à la hauteur des autonomies actuelles des modes d'alimentation diesel. Ceci est problématique, notamment dans le cas des locomotives qui n'ont pas de mode d'alimentation par caténaire.

Il apparait donc nécessaire d'économiser l'énergie embarquée dans les batteries pour allonger l'autonomie. Pour cela, un moyen connu consiste à réduire la consommation des équipements auxiliaires embarqués dans le véhicule ferroviaire ou d'en optimiser le fonctionnel.

Cependant, un besoin existe d'économiser davantage l'énergie utilisée lors du fonctionnement du véhicule ferroviaire.

Le document EP 3 473 485 A1 divulgue une méthode de sélection de M voitures de traction parmi la pluralité de voitures de traction d'un train.

Le document EP 2 650 186 A2 divulgue l'activation séquentielle des voitures de traction d'un train, en fonction par exemple de la position du train ou de la vitesse du train.

Le document EP 3 838 652 A1 présente un système d'entrainement pour un véhicule ferroviaire.

Le document US 2018/361878 A1 divulgue un véhicule ferroviaire comprenant un système de commande des lignes de traction qui est configuré pour déterminer le nombre total courant de lignes de traction de la voiture motrice dans le mode actif, et pour déterminer une puissance individuelle de traction requise fournie par le nombre total courant de lignes de traction dans le mode actif, et pour commander le passage d'au moins une des lignes de traction de la voiture motrice du mode actif au mode inactif, et pour commander conjointement la puissance fournie par le moteur de chaque ligne de traction restante dans le mode actif, pour que l'ensemble des lignes de traction restant dans le mode actif fournisse ladite puissance individuelle de traction requise.

Enfin le document EP 2 960 122 A1 présente un dispositif de commande de freinage.

Un but de l'invention est donc de fournir une solution permettant d'économiser l'énergie utilisée lors du fonctionnement du véhicule ferroviaire, notamment dans un véhicule ferroviaire présentant au moins un mode d'alimentation par batterie.

A cet effet, l'invention concerne un véhicule ferroviaire et un procédé de commande selon les revendications annexées.

L'invention sera mieux comprise à la lecture de la description qui va suivre, donnée uniquement à titre d'exemple, et faite en se référant aux dessins annexés, sur lesquels :
La figure 1 est un organigramme schématique d'un exemple de véhicule ferroviaire selon un premier mode de réalisation de l'invention ;
La figure 2 illustre schématiquement un exemple de rendement d'une des lignes de traction de la voiture motrice de la figure 1 en fonction de la puissance de traction fournie par la ligne de traction ;
La figure 3 illustre schématiquement un exemple de courbes caractéristiques d'effort maximal apte à être fourni par la voiture motrice de la figure 1 en fonction de la vitesse ;
La figure 4 illustre schématiquement différentes sélections possibles pour le passage de deux lignes de traction du mode actif au mode inactif de la voiture motrice de la figure 1 ;
La figure 5 illustre schématiquement différents exemples de véhicules ferroviaires selon un deuxième mode de réalisation de l'invention ;
La figure 6 illustre schématiquement un exemple de rendement d'une des voitures motrices de la figure 5 en fonction de la puissance de traction fournie par la voiture motrice ; et
La figure 7 illustre schématiquement un exemple de courbes caractéristiques d'effort maximal apte à être fourni par un des véhicules ferroviaires de la figure 5 en fonction de la vitesse.

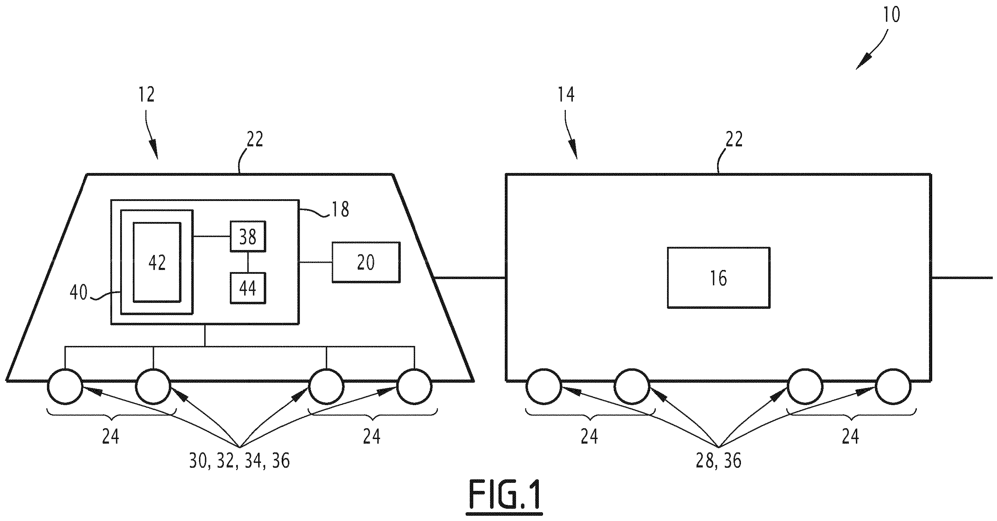

Un exemple de véhicule ferroviaire 10 selon un premier mode de réalisation est illustré schématiquement sur la figure 1.

Le véhicule ferroviaire 10 comprend au moins une voiture motrice 12. Par exemple le véhicule comprend une unique voiture motrice 12.

Le véhicule ferroviaire 10 comprend aussi par exemple au moins une voiture auxiliaire 14 dépourvue de système de traction.

Avantageusement, le véhicule ferroviaire 10 comprend un système batterie 16.

De plus, le véhicule ferroviaire 10 comprend un système de commande 18 du véhicule.

En outre, le véhicule ferroviaire 10 comprend de préférence un système de capteurs 20 propre à acquérir des paramètres courants de déplacement du véhicule 10, comme une vitesse courante et/ou une accélération courante du véhicule 10.

Sur les figures, chaque voiture motrice 12 est représentée par un trapèze et chaque voiture auxiliaire 14 est représentée par un rectangle.

Chaque voiture auxiliaire 14 comporte un châssis 22 et des essieux non-moteurs 28.

Par exemple, chaque voiture auxiliaire 14 comporte des bogies 24, non représentés en détails. Chaque bogie 24 de chaque voiture auxiliaire 14 comprend deux des essieux non-moteurs 28.

La voiture de tête, placée en tête du véhicule ferroviaire 10, est de préférence une voiture motrice 12. La voiture de tête comprend alors de préférence une cabine de pilotage destinée à recevoir un conducteur de l'ensemble du véhicule ferroviaire constitué 10.

Chaque voiture motrice 12 comprend au moins deux lignes de traction 30, chaque ligne de traction 30 comprenant au moins un essieu moteur 32 et un moteur 34 respectifs, le moteur 34 étant raccordé à l'essieu moteur 32.

Chaque ligne de traction 30 comprend de préférence un réducteur interposé entre le moteur 34 et l'essieu moteur 32.

Chaque voiture motrice 12 comprend avantageusement le même nombre de lignes de traction 30.

Dans l'exemple de la figure 1, chaque voiture motrice 12 comprend quatre lignes de traction 30.

Alternativement, chaque voiture motrice 12 comprend un nombre de lignes de traction 30 différent de quatre, comme par exemple deux, trois, cinq, six, huit ou douze.

Avantageusement, les moteurs 34 de tous les lignes de traction 30 du véhicule ferroviaire 10 sont identiques.

Par « identiques », on entend qu'ils présentent le même dimensionnement et les mêmes caractéristiques techniques, telles que la puissance maximale apte à être produite et la courbe caractéristique d'effort maximal apte à être fournies en fonction de la vitesse.

Chaque moteur 34 est propre à être alimenté par le système batterie 16 du véhicule ferroviaire 10.

Chaque essieu moteur 32 comporte deux roues 36 et un axe transversal reliant les deux roues 36.

Dans chaque ligne de traction 30, l'essieu moteur 32 est propre à être entrainé en rotation par le moteur 34.

Par « l'essieu moteur 32 est entrainé en rotation par le moteur 34 », on entend par exemple que l'axe transversal est entrainé en rotation sur son axe par le moteur 34.

Chaque ligne de traction 30 présente au moins un mode actif de fonctionnement, dans lequel l'essieu moteur 32 est entrainé en rotation par le moteur 34 en fonction d'une puissance fournie par le moteur 34, et un mode inactif de fonctionnement, dans lequel le moteur 34 n'entraine pas l'essieu 32 en rotation.

En particulier, dans le mode inactif de fonctionnement, aucun couple n'est exercé sur l'essieu moteur 32 par le moteur 34.

Dans le mode inactif, l'essieu moteur 32 est libre en rotation, et est par exemple alors entrainé en rotation par les frottements des roues 36 de l'essieu moteur 32 sur les rails, dus au déplacement du véhicule ferroviaire 10.

Dans le mode actif de fonctionnement, le moteur 34 applique un couple sur l'essieu moteur 32.

Dans le mode actif, le moteur 34 est propre à fournir une puissance variable jusqu'à une puissance maximale prédéterminée. La puissance fournie par le moteur 34, dans le mode actif, est commandée par le système de commande 18.

La puissance maximale prédéterminée dépend par exemple de la vitesse de déplacement du véhicule ferroviaire 10.

De préférence, chaque voiture motrice 12 comporte un châssis 22 et des bogies 24, chaque bogie 24 portant au moins une des lignes de traction 30 de la voiture 12.

En particulier, chaque bogie 24 de chaque voiture motrice 12 comprend un chariot, sur lequel est fixé l'essieu moteur 32 et le moteur 34 de chaque ligne de traction 30 portée. Le chariot est par exemple situé sous la voiture 12.

Chaque bogie 24 est mobile par rapport au châssis 22 de la voiture 12, 14, et destiné à s'orienter convenablement par rapport aux rails au cours du déplacement du véhicule 10.

Dans l'exemple de la figure 1, chaque voiture motrice 12 comprend quatre lignes de traction 30 portées par deux bogies 24.

Ceci constitue un arrangement classique pour une voiture motrice 12 en disposant quatre essieux moteurs 32 répartis sur deux bogies 24.

Le véhicule 10 présente au moins un mode d'alimentation batterie dans lequel chaque ligne de traction 30 du véhicule 10 est alimentée par le système batterie 16.

Le système batterie 16 du véhicule ferroviaire 10 est propre à alimenter le moteur 34 de chaque ligne de traction 30 du véhicule 10.

Pour ce faire, chaque voiture motrice 12 comprend de préférence un convertisseur respectif pour chaque moteur 34, chaque moteur 34 étant alimenté en électricité par l'intermédiaire d'un convertisseur propre. Dans une variante, chaque voiture motrice 12 comprend un convertisseur respectif pour chaque bogie 24, qui est donc commun aux moteurs 34 du bogie 24.

Le système batterie 16 est en particulier dimensionné pour assurer une autonomie minimale de fonctionnement dans le mode d'alimentation batterie, par exemple supérieure à 50 km parcourus.

Le système batterie 16 est au moins en partie inclus dans une des voitures 12, 14 du véhicule 10.

Par exemple, le système batterie 16 est inclus dans une unique voiture dédiée. Ladite voiture forme alors un fourgon-générateur chargé de délivrer l'énergie électrique nécessaire au fonctionnement des lignes de traction 30 de chaque voiture motrice 12 du véhicule ferroviaire 10. Ladite voiture est par exemple une des voitures auxiliaires 14 du véhicule 10.

En variante, le système batterie 16 est réparti sur plusieurs voitures du véhicule ferroviaire 10.

Le système de commande 18 comporte par exemple au moins un processeur 38 et une mémoire 40, la mémoire 40 stockant des modules ou applications logicielles 42 propres à être exécutées par le processeur 38 pour réaliser les fonctions du système de commande 18 décrites ci-dessous. Le système de commande 18 comprend par exemple un seul processeur. Alternativement, le système de commande 18 comprend plusieurs processeurs, qui sont situés dans une même zone géographique, ou sont, au moins partiellement, situés dans des zones géographiques différentes et sont alors propres à communiquer entre eux.

En variante, le système de commande 18 est mis en œuvre au moins en partie sous forme de composants logiques programmables ou de circuits intégrés dédiés, capables de réaliser les fonctions du système de commande 18 décrites ci-dessous.

Par le terme « mémoire », on entend toute mémoire informatique volatile ou non volatile appropriée au sujet actuellement divulgué, telle qu'une mémoire vive (RAM), une mémoire morte (ROM) ou d'autres éléments électroniques, optique, magnétique ou tout autre support de stockage lisible par ordinateur sur lequel les données et les fonctions de commande telles que décrites ici sont stockées.

Par conséquent, la mémoire est un support de stockage tangible où les données et les fonctions de commande sont stockées sous une forme non transitoire.

Le système de commande 18 comprend aussi une interface homme-machine 44.

Le système de commande 18 est notamment configuré pour recevoir une commande de déplacement d'un conducteur du véhicule 10, par exemple par l'intermédiaire de l'interface homme-machine 44.

Le système de commande 18 est avantageusement configuré pour déterminer une puissance globale de traction requise à fournir par le véhicule ferroviaire 10 pour mettre en œuvre la commande de déplacement du conducteur.

Pour chaque voiture motrice 12, le système de commande 18 est configuré pour déterminer une puissance individuelle de traction requise à fournir par la voiture motrice 12.

En particulier, chaque puissance individuelle de traction requise est par exemple déterminée pour que l'ensemble du véhicule ferroviaire 10 fournisse la puissance globale de traction requise.

Dans le cas où le véhicule ne comprend qu'une voiture motrice 12, la puissance individuelle de traction requise correspond à la puissance globale de traction requise.

Le système de commande 18 est connecté à chaque ligne de traction 30, par exemple de manière filaire ou sans fil. En cas de liaison sans fil, la connexion est réalisée par exemple par ondes radios.

Le système de commande 18 est configuré pour commander les lignes de traction 30 de chaque voiture motrice 12 pour que la voiture motrice 12 fournisse la puissance individuelle de traction requise.

En particulier, la puissance individuelle de traction requise mise en œuvre par la voiture motrice 12 à chaque instant correspond à la somme des puissances fournies par les moteurs 34 des lignes de traction 30 de la voiture motrice 12 dans le mode actif.

De manière générale, pour chaque ligne de traction 30, le système de commande 18 est propre à commander le passage de la ligne de traction 30 d'un des modes de fonctionnement actif ou inactif à l'autre.

Le système de commande 18 est aussi propre à commander la puissance fournie par le moteur 34 de chaque ligne de traction 30 fonctionnant dans le mode actif.

Dans le premier mode de réalisation, le système de commande 18 est configuré pour commander le fonctionnement des lignes de traction 30 en privilégiant le rendement pour améliorer la consommation d'énergie, dans au moins une phase de déplacement du véhicule.

Pour cela, le système de commande 18 est configuré pour déterminer le nombre total courant de lignes de traction 30 de la voiture motrice 12 dans le mode actif, à un instant donné au cours d'un déplacement du véhicule 10. Le nombre total courant de lignes de traction 30 de la voiture motrice 12 dans le mode actif, à l'instant donné, est par exemple alors supérieur ou égal à deux.

L'instant donné est par exemple l'instant présent.

Le système de commande 18 est aussi configuré pour déterminer une puissance individuelle de traction requise fournie, à l'instant donné, par le nombre total courant de lignes de traction 30 dans le mode actif de la voiture motrice 12.

Ladite puissance individuelle de traction requise à l'instant donné est non nulle.

Le système de commande 18 est alors configuré pour commander le passage d'au moins une des lignes de traction 30 de la voiture motrice 12 du mode actif au mode inactif, et pour commander conjointement la puissance fournie par le moteur 34 de chaque ligne de traction 30 restant dans le mode actif de la voiture motrice 12, pour que l'ensemble de la ou des ligne(s) de traction restante(s) dans le mode actif fournisse ladite puissance individuelle de traction requise.

Le ou les passage(s) au mode inactif est(sont) commandé(s) concurremment à la commande de chaque puissance fournie par la ou les ligne(s) de traction restante(s) active(s).

Chaque ligne de traction 30 restant dans le mode actif est ainsi commandée pour fournir une puissance supérieure à celle qu'elle fournissait avant le passage au mode inactif de chaque ligne de traction 30 désormais inactif.

De préférence, le système de commande 18 est configuré pour commander conjointement le passage d'au moins deux, par exemple d'au moins la moitié, des lignes de traction 30 de la voiture motrice 12 du mode actif au mode inactif.

Ainsi, le système de commande 18 permet de passer d'une configuration avec un nombre important de lignes de traction 30 actifs, qui permet de favoriser le coefficient d'adhérence et donc de garantir le meilleur démarrage du véhicule ferroviaire 10, à une configuration avec un nombre réduit de ligne(s) de traction active(s) 30, qui favorise le rendement en fonctionnement et donc diminue la consommation d'énergie.

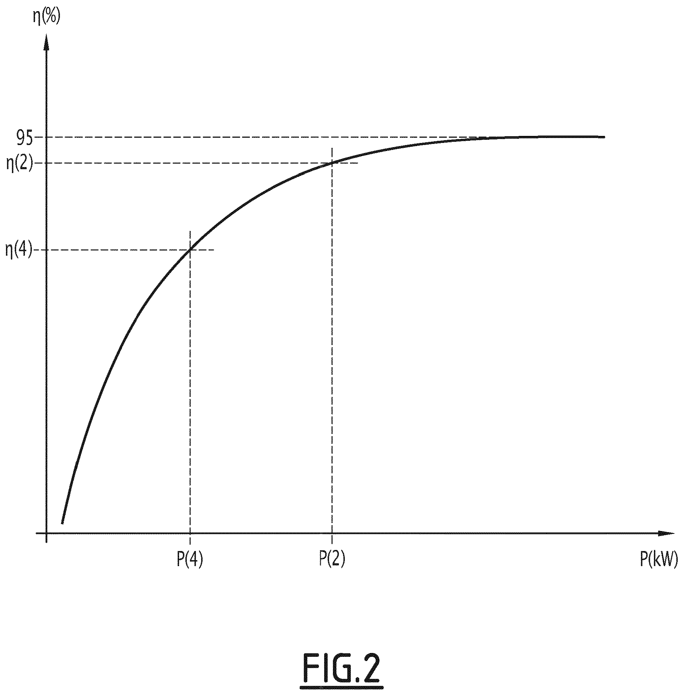

Ceci apparait clairement à la lumière de la figure 2 qui illustre le rendement respectif η de chaque ligne de traction 30, en fonction de la puissance de traction P fournie par la ligne de traction 30, dans le cas d'une voiture motrice 12 telle qu'illustrée sur la figure 1, c'est-à-dire présentant un total de quatre lignes de traction 30.

Sur la figure 2, le nombre entre parenthèses correspond au nombre d'essieux moteurs 32 fournissant la traction, c'est-à-dire le nombre d'essieux moteurs 32 de la ou des ligne(s) de traction 30 dans le mode actif.

Comme illustré sur la figure 2, dans une configuration de la voiture motrice 12 où quatre lignes de traction 30 sont dans le mode actif (quatre essieux moteurs 32 fournissant la traction), chaque ligne de traction 30 est sollicitée pour fournir une puissance P(4) selon un rendement η(4). Passer d'une telle configuration à une configuration où seulement deux des lignes de traction 30 sont dans le mode actif (deux essieux moteurs 32 fournissant la traction) permet de solliciter respectivement les deux lignes de traction 30 restantes avec une puissance P(2) supérieure à la puissance P(4), le rendement η(2) de chaque ligne de traction 30 pour fournir la puissance P(2) étant supérieur au rendement η(4).

La puissance individuelle de traction fournie par la voiture motrice 12 reste la même pour ces deux configurations, mais le rendement augmente et les pertes diminuent.

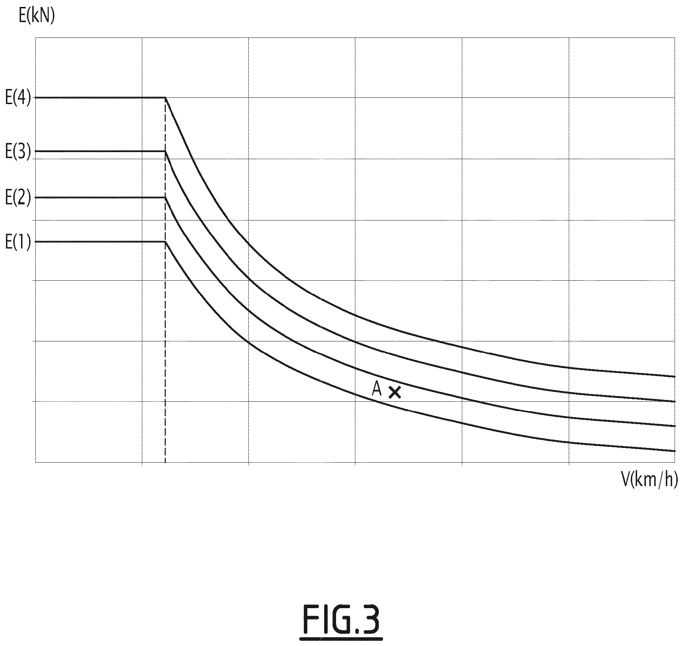

Un exemple de commande de passage du mode actif au mode inactif va maintenant être décrit, en référence à l'exemple de la figure 3.

La commande de passage dépend d'une vitesse courante du véhicule 10 à l'instant donné et d'une puissance maximale apte à être fournie par la voiture motrice 12.

Ainsi, le système de commande 18 est configuré pour acquérir une vitesse courante du véhicule ferroviaire 10 à l'instant donné. La vitesse courante est par exemple acquise par l'intermédiaire du système de capteurs 20 du véhicule ferroviaire 10.

De plus, le système de commande 18 est configuré pour déterminer la puissance individuelle maximale apte à être fournie par la voiture motrice 12 à ladite vitesse courante par un nombre de ligne(s) de traction dans le mode actif inférieur audit nombre total courant.

La puissance individuelle maximale apte à être fournie par la voiture motrice 12 correspond à la somme des puissances maximales aptes à être fournies par les lignes de traction 30 actives.

Le système de commande 18 est configuré pour commander ledit passage d'au moins une des lignes de traction 30 au mode inactif au moins si la puissance individuelle de traction requise est inférieure à ladite puissance individuelle maximale déterminée.

De préférence, le système de commande 18 est configuré pour commander ledit passage d'au moins une des lignes de traction 30 au mode inactif au moins si la puissance individuelle de traction requise est inférieure à ladite puissance individuelle maximale déterminée d'un seuil prédéterminé non nul.

Le seuil prédéterminé est par exemple supérieur ou égal à 5%, de préférence à 10%, de ladite puissance individuelle maximale déterminée.

Cet exemple de commande de passage est en particulier illustré sur la figure 3 qui correspond au graphe de l'effort E en fonction de la vitesse V pour un total de quatre lignes de traction 30. Chaque courbe E(n) correspond à la courbe caractéristique d'effort maximal apte à être fourni par la voiture motrice 12 en fonction de la vitesse, dans le cas où n ligne(s) de traction est(sont) active(s).

La courbe E(n) correspond en particulier à la somme des courbes caractéristiques d'effort maximal apte à être fourni de chacun des n ligne(s) de traction.

Le système de commande 18 est propre à acquérir à chaque instant le point de fonctionnement de la voiture motrice 12 sur ce graphe effort/vitesse.

La puissance consommée est à chaque instant déterminée en fonction de l'effort de traction fourni par le voiture motrice 12.

Dans le cas de la figure 3 où la voiture motrice 12 présente une configuration où quatre lignes de traction 30 sont actives mais que le point de fonctionnement de la voiture motrice 12 sur ledit graphe est le point A, qui est donc inférieur à la courbe d'effort maximal apte à être fourni par seulement deux lignes de traction 30 actives, le système de commande 18 commande le passage à une configuration où seuls deux des quatre lignes de traction 30 sont actives.

La régulation de la puissance s'établie donc sur ces deux lignes de traction 30 actives.

De plus, le système de commande 18 est configuré pour commander ledit passage d'au moins une des lignes de traction 30 au mode inactif au moins si la vitesse courante est supérieure à une vitesse seuil prédéterminée.

En outre, de préférence, le système de commande 18 est configuré pour commander le passage de toutes les lignes de traction 30 de la voiture 12 dans le mode actif, lorsque la vitesse courante du véhicule ferroviaire 10 est en-dessous de ladite vitesse seuil prédéterminée.

La vitesse seuil est en particulier déterminée en amont du déplacement du véhicule ferroviaire 10 puis stockée dans la mémoire 40.

La vitesse seuil prédéterminée est non nulle.

La vitesse seuil est déterminée en fonction de la courbe caractéristique de l'effort maximal apte à être fourni par la voiture motrice 12, étant donné le nombre de ligne(s) de traction active(s) en fonction de la vitesse, telle que celles illustrées sur la figure 3.

Chaque courbe caractéristique de l'effort maximal/vitesse présente notamment un plateau de limitation d'effort qui s'étend entre une vitesse nulle et une vitesse de limitation d'effort, la vitesse de limitation d'effort étant associée à la cassure de la limitation d'effort.

La vitesse de limitation d'effort est connue par l'homme du métier et ne dépend pas du nombre de ligne(s) de traction active(s). En d'autres termes, comme illustré sur la figure 3, le plateau de chaque courbe caractéristique de l'effort maximal/vitesse s'arrête à la même vitesse de limitation d'effort.

La vitesse seuil est déterminée en fonction de ladite vitesse de limitation d'effort.

Par exemple, la vitesse seuil est égale à ladite vitesse de limitation d'effort.

Dans un autre exemple, la vitesse seuil est par exemple supérieure ou égale à 95% de ladite vitesse de limitation d'effort.

Dans encore un autre exemple, la vitesse seuil est par exemple inférieure ou égale à 105% de ladite vitesse de limitation d'effort.

En effet, après la cassure de la limitation d'effort, on considère que le véhicule ferroviaire 10 est sorti d'une phase nécessitant une adhérence élevée.

Ainsi, le système de commande 18 favorise alternativement soit l'adhérence, soit le rendement en fonctionnement, de manière judicieuse par rapport aux besoins courants du véhicule.

De préférence, lorsque la vitesse courante est inférieure à la vitesse seuil et que le système de commande 18 détecte une perte d'adhérence du véhicule ferroviaire 10, le système de commande 18 est configuré pour mettre en œuvre un système anti-patinage. L'homme du métier connait un tel système anti-patinage qui ne sera donc pas décrit plus en détails ici.

Pour cela, le système de capteurs 20 du véhicule 10 comprend des capteurs de rotation des essieux moteurs 32, le patinage étant par exemple détecté par l'intermédiaire desdits capteurs de rotation des essieux moteurs 32.

En outre, le système de commande 18 est avantageusement propre à sélectionner lae ou les ligne(s) de traction commandée(s) 30 passant du mode actif au mode inactif selon un ou des critères de sélection prédéterminé(s).

Ainsi, dans un mode de réalisation préféré, chaque ligne de traction 30 de la voiture motrice 12, dont le passage du mode actif au mode inactif est commandé par le système de commande 18 comme décrit ci-dessus, est sélectionnée parmi toutes les lignes de traction 30 de la voiture 12 dans le mode actif à l'instant donné, en fonction d'au moins un critère de sélection prédéterminé.

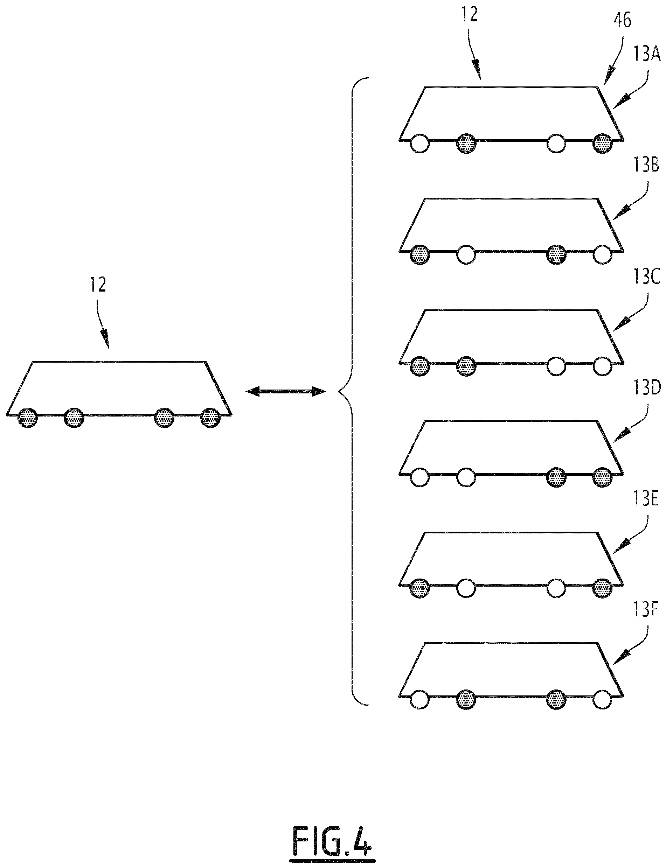

La figure 4 illustre une telle sélection dans l'exemple particulier d'une voiture motrice 12 présentant un total de quatre lignes de traction 30. Cette figure 4 illustre les possibilités de passage de la configuration où les quatre lignes de traction 30 sont actives aux différentes configurations où seulement deux lignes de traction 30, parmi les quatre, sont sélectionnées pour fonctionner dans le mode actif.

Ces configurations sont désignées par les références 13A à 13F.

Sur la figure 4, chaque ligne de traction 30 est illustrée par un rond. Chaque ligne de traction 30 dans le mode actif est illustrée par un rond en trait gras et rempli de pointillés, et chaque ligne de traction 30 dans le mode actif est illustrée par un rond en trait fin et non rempli.

Différents critères de sélection sont possibles et des exemples vont être décrits ci-après. D'autres critères de sélection pourront être pris en compte par l'homme du métier.

Dans un premier exemple, le système de commande 18 est configuré pour déterminer, pour chaque ligne de traction 30 de la voiture 12 dans le mode actif, un statut opérationnel de la ligne de traction 30, au moins choisi entre un statut normal et un statut dégradé.

Le critère de sélection prédéterminé dépend au moins du statut opérationnel de chaque ligne de traction 30 active.

Dans le statut normal, la ligne de traction 30 fonctionne ou est propre à fonctionner de manière optimale. En d'autres termes, dans le statut normal, la ligne de traction 30 ne présente aucune limitation de fonctionnement.

Dans le statut dégradé, la ligne de traction 30 fonctionne ou est propre à fonctionner mais présente des limitations de fonctionnement. Le statut dégradé peut par exemple résulter d'une panne d'un équipement de la ligne de traction 30. En particulier, le statut est dégradé si un équipement non essentiel de la ligne de traction 30 est indisponible suite à une perte de sa ressource (par exemple électrique).

Le statut dégradé est distinct d'un statut perdu pour lequel la ligne de traction 30 n'est plus propre à fonctionner. Un statut perdu correspond par exemple au cas où un équipement essentiel au fonctionnement de la ligne de traction 30 est indisponible.

En d'autres termes, chaque ligne de traction 30 de la voiture motrice 12 est sélectionnée, parmi toutes les lignes de traction 30 actives, pour passer du mode actif au mode inactif, au moins si le statut opérationnel de ladite ligne 30 est un statut dégradé.

Dans un deuxième exemple alternatif ou complémentaire, le critère de sélection prédéterminé dépend du maintien d'au moins une ligne de traction 30 dans le mode actif par bogie 24 de la voiture 12.

Dans un tel cas de figure, chaque voiture motrice 12 comprend alors de préférence un convertisseur respectif pour chaque moteur 34.

En d'autres termes, chaque ligne de traction 30 de la voiture motrice 12 est sélectionnée, parmi toutes les lignes de traction 30 actives, pour passer du mode actif au mode inactif, au moins pour garder au moins une ligne de traction 30 dans le mode actif par bogie 24 de la voiture 12.

Sur la figure 4, les configurations 13A, 13B, 13E et 13F illustrent le respect de ce deuxième exemple de critère de sélection. L'avant de la voiture motrice 12, par rapport au sens de circulation, est indiqué par la référence 46.

Dans un troisième exemple alternatif ou complémentaire, le critère de sélection prédéterminé dépend au moins de la durée de fonctionnement de chaque ligne de traction 30.

Ainsi, le système de commande 18 est configuré pour déterminer, pour chaque ligne de traction 30 de la voiture 12, un paramètre représentatif de la durée de fonctionnement du ligne de traction 30.

De préférence, ledit paramètre représentatif de la durée de fonctionnement de la ligne de traction 30 est déterminé en fonction d'un nombre de rotations de l'essieu moteur 32, d'une durée temporelle de fonctionnement, d'une période écoulée de chaque voiture motrice 12 depuis une dernière opération de maintenance, et/ou d'un nombre de kilomètres parcourus dans le mode actif.

Le critère de sélection prédéterminé dépend d'une relation d'ordre sur ledit paramètre de durée de chaque ligne de traction 30 active.

En d'autres termes, chaque ligne de traction 30 de la voiture motrice 12 est sélectionnée, parmi toutes les lignes de traction 30 actives, pour passer du mode actif au mode inactif, au moins en fonction de ladite relation d'ordre.

Dans un quatrième exemple alternatif ou complémentaire, le critère de sélection prédéterminé dépend d'une dynamique du véhicule ferroviaire 10, par exemple d'une direction de roulage et/ou d'une accélération courante du véhicule 10.

Par exemple, en cas d'accélération positive du véhicule 10, le critère de sélection favorise les lignes de traction 30 placées à l'arrière de la voiture motrice 12, par rapport au sens de circulation.

Le critère de sélection prend ainsi en compte des éventuels phénomènes de cabrage de la voiture motrice 12, en cas de reprise de vitesse par exemple.

Sur la figure 4, la configuration 13C illustre le respect de ce quatrième exemple de critère de sélection. La configuration 13B illustre par exemple le respect simultané du deuxième exemple de critère et du quatrième exemple de critère.

Avantageusement, le système de commande 18 est configuré pour faire la sélection de chaque ligne de traction 30 active à faire passer en mode inactif en fonction d'au moins deux critères de sélection, par exemple tels que ceux décrits ci-dessus.

Le système de commande 18 est alors configuré pour faire la sélection en fonction des critères de sélection selon une relation d'ordre prédéterminée sur lesdits critères de sélection.

En d'autres termes, le système de commande 18 est par exemple configuré pour privilégier au moins un des critères, par exemple au détriment d'un autre ou d'autres.

De préférence, le système de commande 18 est aussi propre à re-solliciter chaque ligne de traction 30 rendu précédemment inactive. En particulier, le système de commande 18 est configuré pour commander le passage au mode actif d'au moins une des lignes de traction 30 de la voiture motrice 12 précédemment passée du mode actif au mode inactif en fonction d'une nouvelle puissance individuelle de traction requise.

Par exemple, le système de commande 18 est configuré pour commander un tel passage, lorsque la nouvelle puissance individuelle de traction requise est supérieure à la puissance maximale apte à être fournie à la vitesse courante par le nombre courant de ligne(s) de traction dans le mode actif.

Avantageusement, le système de commande 18 est configuré pour temporiser d'une période temporelle prédéterminée la commande du passage de chaque ligne de traction 30 du mode actif au mode inactif, si la ligne de traction 30 a été précédemment passée du mode inactif au mode actif.

Pour cela, le système de commande 18 est propre à stocker dans la mémoire 40 chaque instant, dit « d'activation », correspondant au passage commandé d'une des lignes de traction 30 du mode inactif au mode actif.

Plus généralement, le système de commande 18 est avantageusement propre à stocker chaque instant correspondant au passage commandé d'une des lignes de traction 30 d'un mode de fonctionnement à l'autre.

Le système de commande 18 est alors configuré pour commander ledit passage au mode inactif d'au moins une des lignes de traction 30 précédemment passée du mode inactif au mode actif seulement après l'écoulement de ladite période temporelle comptée à partir du dernier instant d'activation stocké.

Cette temporisation uniformise le fonctionnement du véhicule ferroviaire 10 et évite de soumettre les lignes de traction 30 à de trop nombreux transitoires.

Un premier exemple de procédé de commande va maintenant être décrit.

Le premier procédé de commande est mis en œuvre par ordinateur, avantageusement mis en œuvre par le système de commande 18 selon le premier mode de réalisation décrit ci-dessus.

Le procédé de commande comprend au moins une étape de détermination du nombre total courant de lignes de traction 30 de la voiture motrice 12 dans le mode actif, à un instant donné au cours d'un déplacement du véhicule 10.

L'instant donné est par exemple l'instant présent.

Le procédé comprend aussi une étape de détermination d'une puissance individuelle de traction requise fournie, à l'instant donné, par le nombre total courant de lignes de traction 30 dans le mode actif de la voiture motrice 12.

De plus, le procédé comprend une étape de commande du passage d'au moins une des lignes de traction 30 de la voiture motrice 12 du mode actif au mode inactif et, conjointement, commande de la puissance fournie par le moteur 34 de chaque ligne de traction 30 restant dans le mode actif de la voiture motrice 12, pour que l'ensemble de la ou des ligne(s) de traction restante(s) dans le mode actif fournisse ladite puissance individuelle de traction requise.

L'étape de commande présente toutes les caractéristiques décrites ci-dessus pour le système de commande 18.

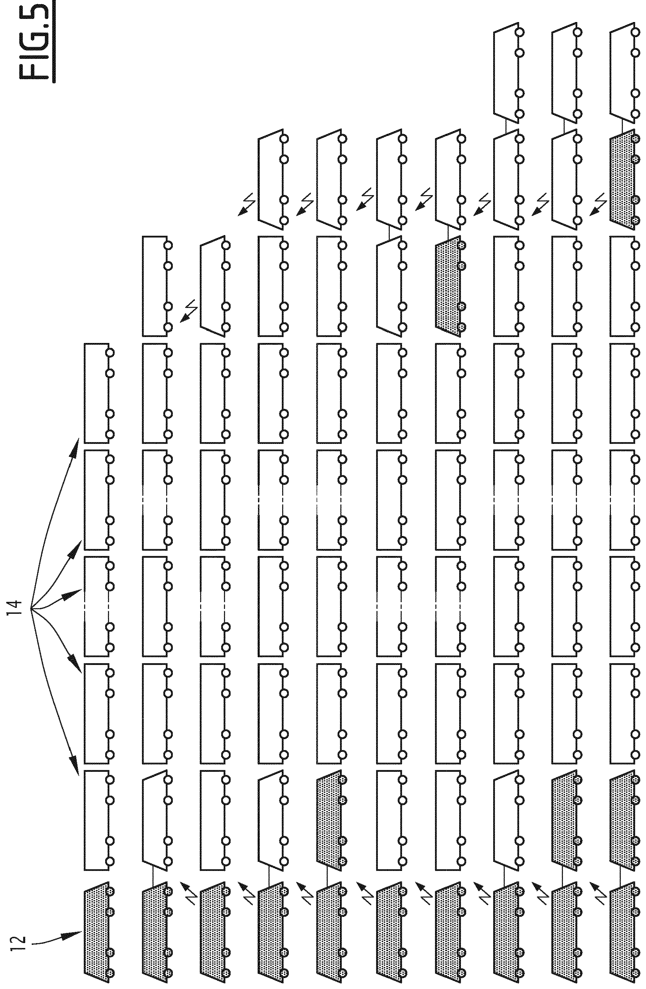

Un deuxième mode de réalisation du véhicule ferroviaire 10 va maintenant être décrit, en référence aux figures 5 à 7. Seules les différences avec le premier mode de réalisation seront décrites par la suite.

Dans le deuxième mode de réalisation, le véhicule 10 comprend au moins deux voitures motrices 12.

La figure 5 illustre différents exemples de véhicules ferroviaires 10. En particulier, le véhicule ferroviaire 10 comprend un nombre total de voitures motrices 12 supérieur ou égal à deux, par exemple égal à deux, trois, quatre ou cinq.

Au moins une autre voiture motrice 12 est par exemple placée à la suite de la voiture motrice 12 de tête ou à la dernière position du véhicule ferroviaire 10.

Le véhicule ferroviaire 10 fonctionne par exemple en unité multiple, les voitures motrices 12 sont alors couplées pour n'être commandées que par un seul conducteur, disposé par exemple dans la cabine de la voiture motrice 12 de tête.

La figure 5 montre aussi différentes possibilités de connexion entre voitures motrices 12. La connexion sans fil est représentée par une flèche alors que la connexion filaire est représentée par un trait entre deux voitures motrices 12.

Chaque voiture motrice 12 présente au moins une configuration active de fonctionnement, dans laquelle au moins une des lignes de traction 30 de la voiture 12 est dans le mode actif, et une configuration inactive de fonctionnement, dans laquelle toutes les lignes de traction 30 de la voiture 12 sont dans le mode inactif.

Sur la figure 5, les voitures motrices 12 dans la configuration active sont illustrées en étant grisées.

En particulier, dans la configuration inactive de fonctionnement, la voiture motrice 12 ne tracte pas le véhicule ferroviaire 10.

Dans la configuration inactive, tous les essieux moteurs 32 de la voiture motrice inactive sont libres en rotation, et sont par exemple alors entrainés en rotation par les frottements des roues 36 de l'essieu moteur 32 sur les rails, dus au déplacement du véhicule ferroviaire 10.

Dans la configuration active de fonctionnement, le nombre de ligne(s) de traction dans le mode actif et la puissance fournie par le moteur 34 de chaque ligne de traction 30 actif sont commandés par le système de commande 18.

Comme dans le premier mode de réalisation, pour chaque voiture motrice 12, le système de commande 18 est configuré pour déterminer une puissance individuelle de traction requise à fournir par la voiture pour que l'ensemble du véhicule ferroviaire 10 fournisse la puissance globale de traction requise.

Dans le deuxième mode de réalisation, le système de commande 18 est par exemple configuré pour déterminer une puissance individuelle de traction requise à fournir par chaque voiture motrice en divisant la puissance globale de traction requise par le nombre total de voitures motrices 12 du véhicule ferroviaire 10.

Dans le deuxième mode de réalisation, le système de commande 18 est configuré pour commander le fonctionnement des voitures motrices 12 en privilégiant le rendement pour améliorer la consommation d'énergie, d'une manière complémentaire ou alternative de celle décrite ci-dessus pour le premier mode de réalisation.

Pour cela, le système de commande 18 est configuré pour déterminer le nombre total courant de voitures motrices 12 dans la configuration active, à un instant donné au cours d'un déplacement du véhicule 10.

Le nombre total courant de voitures motrices 12 dans la configuration active, à l'instant donné, est par exemple alors supérieur ou égal à deux.

Le système de commande 18 est aussi configuré pour déterminer une puissance globale de traction requise mise en œuvre par le véhicule ferroviaire 10 à l'instant donné. Ladite puissance globale de traction requise à l'instant donné est non nulle.

Le système de commande 18 est configuré pour commander le passage d'au moins une des voitures motrices 12 de la configuration active à la configuration inactive et pour commander conjointement la puissance fournie par chaque voiture motrice 12 restant dans la configuration active, pour que l'ensemble de la ou des voiture(s) motrice(s) restante(s) dans la configuration active fournisse ladite puissance globale de traction requise.

Ledit ou chaque passage à la configuration inactive est commandé concurremment à la commande de chaque puissance fournie par le ou les voiture(s) motrice(s) restant active(s).

De préférence, le système de commande 18 est configuré pour commander conjointement le passage d'au moins deux des voitures motrices 12 de la configuration active à la configuration inactive.

Ainsi, le système de commande 18 permet de passer d'une configuration avec un nombre important de voitures motrices 12 actives, qui permet de favoriser le coefficient d'adhérence et donc de garantir le meilleur démarrage du véhicule ferroviaire 10, à une configuration avec un nombre réduit de voiture(s) motrice(s) active(s), qui favorise le rendement en fonctionnement et donc diminue la consommation d'énergie.

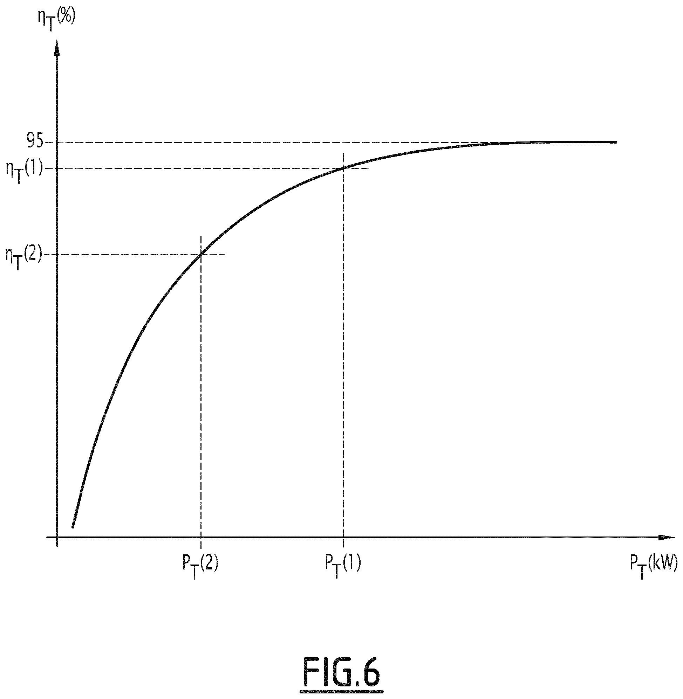

Ceci apparait clairement à la lumière de la figure 6 qui illustre le rendement individuel respectif η_{T} de chaque voiture motrice 12, en fonction de la puissance individuelle de traction P_{T} fournie par la voiture motrice 12, dans le cas d'un véhicule ferroviaire 10 présentant au moins deux voitures motrices 12.

Sur la figure 6, le nombre entre parenthèses correspond au nombre de voiture(s) motrice(s) active(s).

Comme illustré sur la figure 6, dans une configuration du véhicule ferroviaire 10 où deux voitures motrices 12 sont actives, et par exemple toutes les lignes de traction 30 des voitures actives 12 sont actives, chaque voiture motrice 12 est sollicitée pour fournir une puissance individuelle P_{T}(2) selon un rendement individuel η_{T}(2). Passer d'une telle configuration à une configuration où une seule voiture motrice 12 est active, et par exemple toutes les lignes de traction 30 de la voiture active 12 sont actives, permet de solliciter respectivement la voiture motrice 12 avec une puissance individuelle P_{T}(1) supérieure à la puissance individuelle P_{T}(2), le rendement individuelle η_{T}(1) de la voiture motrice 12 pour fournir la puissance individuelle P_{T}(1) étant supérieur au rendement individuelle η_{T}(2).

La puissance globale de traction fournie par le véhicule ferroviaire 10 reste la même pour ces deux configurations, mais le rendement augmente et les pertes diminuent.

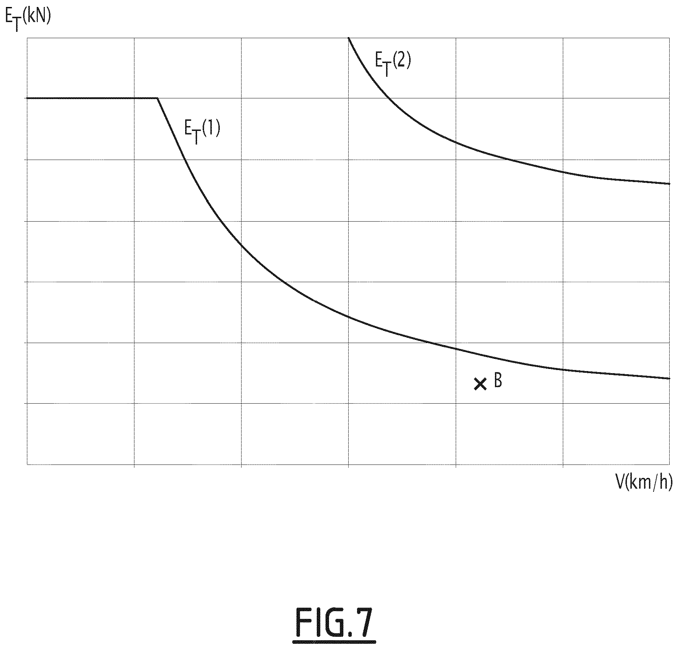

Un exemple de commande de passage de la configuration active à la configuration inactive va maintenant être décrit, en référence à l'exemple de la figure 7.

La commande de passage de configuration dépend par exemple d'une vitesse courante du véhicule à l'instant donné et d'une puissance globale maximale apte à être fournie par l'ensemble des voitures motrices 12 actives.

Ainsi, dans un mode de réalisation préféré, le système de commande 18 est configuré pour déterminer, à l'instant donné, la puissance globale maximale apte à être fournie à ladite vitesse courante par un nombre de voiture(s) motrice(s) dans la configuration active inférieur audit nombre total courant de voitures motrices 12 actives.

Le système de commande 18 est configuré pour commander ledit passage d'au moins une des voitures motrices 12 à la configuration inactive au moins si la puissance globale de traction requise est inférieure à ladite puissance globale maximale déterminée.

De préférence, le système de commande 18 est configuré pour commander ledit passage d'au moins une des voitures motrices 12 à la configuration inactive au moins si la puissance globale de traction requise est inférieure à ladite puissance globale maximale déterminée d'un seuil prédéterminé non nul.

Le seuil prédéterminé est par exemple supérieur ou égal à 5%, de préférence à 10%, de ladite puissance globale maximale déterminée.

Cet exemple de commande de passage de configuration est en particulier illustré sur la figure 7 qui correspond au graphe de l'effort E_{T} en fonction de la vitesse V du véhicule ferroviaire 10 présentant au moins deux voitures motrices 12. Chaque courbe E_{T}(n) correspond à la courbe caractéristique d'effort maximal apte à être fourni par le véhicule ferroviaire 10 en fonction de la vitesse, dans le cas où n voiture(s) motrice(s) est(sont) active(s) et pour des configurations actives dans lesquelles toutes les lignes de traction 30 des voitures actives 12 sont actives.

Le système de commande 18 est propre à acquérir à chaque instant le point de fonctionnement du véhicule ferroviaire 10 sur ce graphe effort/vitesse.

Dans le cas où le véhicule ferroviaire 10 présente une configuration où deux voitures motrices 12 sont actives mais que le point de fonctionnement du véhicule ferroviaire 10 est le point B qui est donc inférieur à la courbe d'effort maximal apte à être fourni par seulement une voiture motrice 12 active, le système de commande 18 commande le passage d'une des voitures motrices 12 de la configuration active à la configuration inactive et commande conjointement la puissance fournie par la voiture motrice 12 restant active en conséquence.

De plus, avantageusement, le système de commande 18 est configuré pour commander ledit passage d'au moins une des voitures motrices 12 à la configuration inactive au moins si la vitesse courante du véhicule ferroviaire 10 est supérieure à une vitesse seuil prédéterminée.

En outre, de préférence, le système de commande 18 est configuré pour commander le passage de toutes les voitures motrices 12 dans la configuration active, lorsque la vitesse courante du véhicule ferroviaire 10 est en-dessous de ladite vitesse seuil prédéterminée.

La vitesse seuil prédéterminée est non nulle.

La vitesse seuil est déterminée en fonction de la courbe caractéristique de l'effort maximal apte à être fourni par le véhicule ferroviaire 10, étant donné le nombre de voiture(s) motrice(s) active(s) en fonction de la vitesse, telle que celles illustrées sur la figure 7.

La vitesse seuil est déterminée en fonction de ladite vitesse de limitation d'effort, comme ce qui a été décrit ci-dessus pour le premier mode de réalisation.

Ainsi, le système de commande 18 favorise alternativement soit l'adhérence, soit le rendement en fonctionnement, de manière judicieuse par rapport aux besoins courants du véhicule.

De préférence, comme pour le premier mode de réalisation, lorsque la vitesse courante est inférieure à la vitesse seuil et que le système de commande 18 détecte une perte d'adhérence du véhicule ferroviaire 10, le système de commande 18 est configuré pour mettre en œuvre un système anti-patinage.

En outre, le système de commande 18 est avantageusement propre à sélectionner le ou les voiture(s) motrice(s) commandée(s) passant de la configuration active à la configuration inactive selon un ou des critères global(aux) de sélection prédéterminé(s).

Ainsi, dans un mode de réalisation préféré, chaque voiture motrice 12, dont le passage de la configuration active à la configuration inactive est commandé par le système de commande 18 comme décrit ci-dessus, est sélectionnée parmi toutes les voitures motrices 12 actives à l'instant donné, en fonction d'au moins un critère global de sélection prédéterminé.

Différents critères globaux de sélection sont possibles et des exemples vont être décrits ci-après. D'autres critères globaux pourront être pris en compte par l'homme du métier.

Dans un premier exemple, le système de commande 18 est configuré pour déterminer, pour chaque voiture active 12, un statut global opérationnel de la voiture 12, au moins choisi entre un statut global normal et un statut global dégradé.

Le critère global de sélection prédéterminé dépend au moins du statut global opérationnel de chaque voiture motrice 12 active.

Dans le statut global normal, chaque ligne de traction 30 de la voiture 12 fonctionne ou est propre à fonctionner de manière optimale. En d'autres termes, dans le statut global normal, chaque ligne de traction 30 de la voiture 12 ne présente aucune limitation de fonctionnement.

Dans le statut global dégradé, au moins une des lignes de traction 30 de la voiture motrice 12 fonctionne ou est propre à fonctionner mais présente des limitations de fonctionnement, ou est perdu et n'est pas propre à fonctionner.

Le statut global dégradé peut par exemple résulter d'une panne d'un équipement essentiel ou non essentiel d'au moins une des lignes de traction 30 de la voiture motrice 12.

En d'autres termes, chaque voiture motrice 12 est sélectionnée, parmi toutes les voitures motrices 12 actives, pour passer de la configuration active à la configuration inactive, au moins si le statut global opérationnel de la voiture motrice 12 est un statut global dégradé.

On privilégie ainsi le fonctionnement des voitures motrices 12 ne présentant pas de défaut sur leurs chaines respectives de traction. Il est ainsi possible de privilégier la fiabilité et la maintenance.

Dans un deuxième exemple alternatif ou complémentaire, le critère global de sélection prédéterminé dépend au moins de la durée de fonctionnement de chaque voiture motrice 12.

Ainsi, le système de commande 18 est configuré pour déterminer, pour chaque voiture motrice 12, un paramètre représentatif de la durée de fonctionnement de la voiture motrice 12.

De préférence, ledit paramètre représentatif de la durée de fonctionnement de la voiture motrice 12 est déterminé en fonction d'une durée temporelle de fonctionnement, d'une période écoulée de la voiture motrice 12 depuis une dernière opération de maintenance, et/ou d'un nombre de kilomètres parcourus dans la configuration active.

Le critère global de sélection prédéterminé dépend alors d'une relation d'ordre sur ledit paramètre de durée de chaque voiture motrice 12 active.

En d'autres termes, chaque voiture motrice 12 est sélectionnée, parmi toutes les voitures motrices 12 actives, pour passer de la configuration active à la configuration inactive, au moins en fonction de ladite relation d'ordre.

Il est ainsi possible ici aussi de privilégier la fiabilité et la maintenance.

Avantageusement, le système de commande 18 est configuré pour faire la sélection de chaque voiture motrice 12 active à faire passer en configuration inactive en fonction d'au moins deux critères globaux de sélection, par exemple tels que ceux décrits ci-dessus.

Le système de commande 18 est alors configuré pour faire la sélection en fonction des critères globaux de sélection selon une relation d'ordre prédéterminée sur lesdits critères globaux de sélection.

En d'autres termes, le système de commande 18 est par exemple configuré pour privilégier au moins un des critères globaux, par exemple au détriment d'un autre ou d'autres.

De préférence, le système de commande 18 est aussi propre à re-solliciter chaque voiture motrice 12 rendu précédemment inactive.

En particulier, le système de commande 18 est configuré pour commander le passage à la configuration inactive d'au moins une des voitures motrices 12 précédemment passées de la configuration active à la configuration inactive en fonction d'une nouvelle puissance globale de traction requise.

Par exemple, le système de commande 18 est configuré pour commander un tel passage, lorsque la nouvelle puissance globale de traction requise est supérieure à la puissance globale maximale apte à être fournie à la vitesse courante par le nombre courant de voiture(s) motrice(s) active(s).

Avantageusement, le système de commande 18 est configuré pour temporiser d'une période temporelle prédéterminée la commande d'un tel passage.

Pour cela, le système de commande 18 est propre à stocker dans la mémoire 40 chaque instant de passage d'une voiture motrice 12 de la configuration active à la configuration inactive.

Le système de commande 18 est alors configuré pour commander ledit passage à la configuration active d'au moins une des voitures motrices 12 précédemment passée à la configuration inactive après l'écoulement de ladite période temporelle comptée à partir du dernier instant de passage stocké.

Un deuxième exemple de procédé de commande va maintenant être décrit.

Le deuxième procédé de commande est mis en œuvre par ordinateur, avantageusement mis en œuvre par le système de commande 18 selon le deuxième mode de réalisation décrit ci-dessus.

Le deuxième procédé de commande comprend au moins une étape de détermination du nombre total courant de voitures motrices 12 dans la configuration active, à un instant donné au cours d'un déplacement du véhicule 10.

Le deuxième procédé comprend aussi une étape de détermination d'une puissance globale de traction requise mise en œuvre par le véhicule ferroviaire 10 à l'instant donné.

De plus, le deuxième procédé comprend une étape de commande du passage d'au moins une des voitures motrices 12 de la configuration active à la configuration inactive et, conjointement, de commande de la puissance fournie par chaque voiture motrice 12 restant dans la configuration active, pour que l'ensemble de la ou des voiture(s) motrice(s) restante(s) dans la configuration active fournisse ladite puissance globale de traction requise.

L'étape de commande présente toutes les caractéristiques décrites ci-dessus pour le système de commande 18 du deuxième mode de réalisation.

Avantageusement, les premier et deuxième modes de réalisation sont implémentés en combinaison afin de fournir une plus grande économie d'énergie encore et un meilleur contrôle du rendement.

Par exemple, le système de commande 18 privilégie l'amélioration du rendement selon le premier mode de réalisation pour ensuite améliorer le rendement selon le deuxième mode de réalisation.

En d'autres termes, de manière avantageuse, le système de commande 18 est configuré pour présenter une première phase de contrôle du rendement au cours de laquelle le système de commande 18 est configuré pour commander le passage des lignes de traction 30 de chaque voiture motrice 12 du mode actif au mode inactif, jusqu'à ce que chaque voiture motrice 12 n'ait plus qu'une ligne de traction 30 active, toutes les voitures motrices 12 étant actives dans cette première phase.

Le système de commande 18 est ensuite configuré pour présenter une deuxième phase de contrôle du rendement au cours de laquelle le système de commande 18 est configuré pour commander le passage des voitures motrices 12 de la configuration active à la configuration inactive.

Alternativement, le premier mode de réalisation est implémenté sans les caractéristiques du deuxième mode de réalisation ci-dessus. Dans une autre variante, le deuxième mode de réalisation est implémenté sans les caractéristiques du premier mode de réalisation ci-dessus.

Dans une variante, le véhicule ferroviaire 10 comprend un conducteur par voiture motrice 12.

Dans une variante ou complément, le véhicule 10 comprend au moins un autre mode d'alimentation, dans lequel chaque ligne de traction 30 du véhicule 10 est alimentée par caténaire ou par combustion d'un carburant tel que du gazole (ou diesel), en plus du mode d'alimentation des lignes de traction 30 par batterie.

Dans une autre variante ou complément, le véhicule est dépourvu d'un mode d'alimentation des lignes de traction 30 par batterie.

Le véhicule 10 présente alors par exemple un mode d'alimentation unique par caténaire, ou un mode d'alimentation unique par combustion (par exemple par diesel), ou deux modes d'alimentation par caténaire et par combustion.

En effet, les caractéristiques de commande ci-dessus restent intéressantes pour tout mode d'alimentation de véhicules ferroviaires 10, afin d'économiser l'énergie utilisée lors du fonctionnement.

## Revendications

1. Véhicule ferroviaire (10) comprenant au moins une voiture motrice (12), chaque voiture motrice (12) comprenant au moins deux lignes de traction (30), chaque ligne de traction (30) comprenant au moins un essieu moteur (32) et un moteur (34) respectifs, le véhicule comprenant aussi un système de commande (18) du véhicule,
chaque ligne de traction (30) présentant au moins un mode actif de fonctionnement, dans lequel l'essieu moteur (32) est entrainé en rotation par le moteur (34) en fonction d'une puissance fournie par le moteur (34), et un mode inactif de fonctionnement, dans lequel le moteur (34) n'entraine pas l'essieu (32) en rotation,
le système de commande (18) étant configuré pour déterminer le nombre total courant de lignes de traction (30) de la voiture motrice (12) dans le mode actif, à un instant donné au cours d'un déplacement du véhicule, et pour déterminer une puissance individuelle de traction requise fournie, à l'instant donné, par le nombre total courant de lignes de traction (30) dans le mode actif,
le système de commande (18) étant configuré pour commander le passage d'au moins une des lignes de traction (30) de la voiture motrice (12) du mode actif au mode inactif, et pour commander conjointement la puissance fournie par le moteur (34) de chaque ligne de traction (30) restante dans le mode actif, pour que l'ensemble de la ou des ligne(s) de traction (30) restante(s) dans le mode actif fournisse ladite puissance individuelle de traction requise,
**caractérisé en ce que** le système de commande (18) est configuré pour acquérir une vitesse courante du véhicule ferroviaire (10) à l'instant donné, et pour déterminer une puissance individuelle maximale apte à être fournie par la voiture motrice (12) à ladite vitesse courante avec un nombre de ligne(s) de traction (30) dans le mode actif inférieur audit nombre total courant, le système de commande (18) étant configuré pour commander ledit passage au moins si la puissance individuelle de traction requise est inférieure à ladite puissance individuelle maximale,
et **en ce que** le système de commande (18) est configuré pour commander ledit passage au moins si la vitesse courante est supérieure à une vitesse seuil prédéterminée non nulle, le système de commande (18) étant de préférence configuré pour commander le passage de toutes les lignes de traction (30) de la voiture motrice (12) dans le mode actif, lorsque la vitesse courante du véhicule ferroviaire (10) est en-dessous de ladite vitesse seuil.

2. Véhicule (10) selon la revendication 1, dans lequel le système de commande (18) est configuré pour commander ledit passage au moins si la puissance individuelle de traction requise est inférieure à ladite puissance individuelle maximale d'au moins un seuil prédéterminé non nul.

3. Véhicule (10) selon l'une quelconque des revendications précédentes, dans lequel chaque ligne de traction (30) de la voiture motrice (12), dont le passage du mode actif au mode inactif est commandé, est sélectionnée parmi toutes les lignes de traction (30) de la voiture (12) dans le mode actif à l'instant donné, en fonction d'au moins un critère de sélection prédéterminé.

4. Véhicule (10) selon la revendication 3, dans lequel le système de commande (18) est configuré pour déterminer, pour chaque ligne de traction (30) de la voiture (12) dans le mode actif, un statut opérationnel de la ligne de traction (30), au moins choisi entre un statut normal et un statut dégradé, le critère de sélection prédéterminé dépendant au moins du statut opérationnel de chaque ligne de traction (30) ; et/ou dans lequel le système de commande (18) est configuré pour déterminer, pour chaque ligne de traction (30) de la voiture (12), un paramètre représentatif de la durée de fonctionnement de la ligne de traction (30), le critère de sélection prédéterminé dépendant au moins d'une relation d'ordre sur ledit paramètre de chaque ligne de traction (30) dans le mode actif.

5. Véhicule (10) selon la revendication 4, dans lequel chaque voiture motrice (12) comprend des bogies (24), chaque bogie (24) portant au moins une des lignes de traction (30) de la voiture (12), le critère de sélection prédéterminé dépendant au moins du maintien d'au moins une ligne de traction (30) dans le mode actif par bogie (24) de la voiture (12).

6. Véhicule (10) selon l'une quelconque des revendications précédentes, dans lequel le système de commande (18) est aussi configuré pour commander le passage au mode actif d'au moins une des lignes de traction (30) de la voiture motrice (12) précédemment passé du mode actif au mode inactif en fonction d'une nouvelle puissance individuelle de traction requise ; le système de commande (18) étant par la suite configuré pour temporiser d'une période temporelle prédéterminée la commande du passage au mode inactif d'au moins une des lignes de traction (30) de la voiture motrice (12) précédemment passé du mode inactif au mode actif.

7. Véhicule (10) selon l'une quelconque des revendications précédentes comprenant au moins deux voitures motrices (12), chaque voiture motrice (12) présentant au moins une configuration active de fonctionnement, dans laquelle au moins une des lignes de traction (30) de la voiture (12) est dans le mode actif, et une configuration inactive de fonctionnement, dans laquelle toutes les lignes de traction (30) de la voiture (12) sont dans le mode inactif,
dans lequel le système de commande (18) est configuré pour déterminer le nombre total courant de voitures motrices (12) dans la configuration active, à un instant donné au cours d'un déplacement du véhicule (10), et pour déterminer une puissance globale de traction requise mise en œuvre par le véhicule ferroviaire (10) à l'instant donné,
le système de commande (18) étant configuré pour commander le passage d'au moins une des voitures motrices (12) de la configuration active à la configuration inactive et pour commander conjointement la puissance fournie par chaque voiture motrice (12) restant dans la configuration active, pour que l'ensemble de la ou des voiture(s) motrice(s) restante(s) dans la configuration active fournisse ladite puissance globale de traction requise.

8. Procédé de commande d'un véhicule ferroviaire (10), le véhicule ferroviaire (10) comprenant au moins une voiture motrice (12), chaque voiture motrice (12) comprenant au moins deux lignes de traction (30), chaque ligne de traction (30) comprenant au moins un essieu moteur (32) et un moteur (34) respectifs, le véhicule comprenant aussi un système de commande (18) du véhicule,
chaque ligne de traction (30) présentant au moins un mode actif de fonctionnement, dans lequel l'essieu moteur (32) est entrainé en rotation par le moteur (34) en fonction d'une puissance fournie par le moteur (34), et un mode inactif de fonctionnement, dans lequel le moteur (34) n'entraine pas l'essieu (32) en rotation,
le procédé comprenant les étapes suivantes :
- détermination du nombre total courant de lignes de traction (30) de la voiture motrice (12) dans le mode actif, à un instant donné au cours d'un déplacement du véhicule (10),
- détermination d'une puissance individuelle de traction requise fournie, à l'instant donné, par le nombre total courant de lignes de traction (30) dans le mode actif de la voiture motrice (12),
- commande du passage d'au moins une des lignes de traction (30) de la voiture motrice (12) du mode actif au mode inactif et, conjointement, commande de la puissance fournie par le moteur (34) de chaque ligne de traction (30) restant dans le mode actif de la voiture motrice (12), pour que l'ensemble de la ou des ligne(s) de traction (30) restante(s) dans le mode actif fournisse ladite puissance individuelle de traction requise,
le procédé étant **caractérisé en ce qu'**il comporte en outre les étapes consistant à :
- acquérir une vitesse courante du véhicule ferroviaire (10) à l'instant donné, et déterminer une puissance individuelle maximale apte à être fournie par la voiture motrice (12) à ladite vitesse courante avec un nombre de ligne(s) de traction (30) dans le mode actif inférieur audit nombre total courant, le système de commande (18) étant configuré pour commander le passage au moins si la puissance individuelle de traction requise est inférieure à ladite puissance individuelle maximale ; et,
- commander le passage au moins si la vitesse courante est supérieure à une vitesse seuil prédéterminée non nulle, et, de préférence, commander le passage de toutes les lignes de traction (30) de la voiture motrice (12) dans le mode actif, lorsque la vitesse courante du véhicule ferroviaire (10) est en-dessous de ladite vitesse seuil.

## Patentansprüche

1. Schienenfahrzeug (10), umfassend wenigstens einen Triebwagen (12), wobei jeder Triebwagen (12) wenigstens zwei Antriebslinien (30) umfasst, wobei jede Antriebslinie (30) entsprechend wenigstens eine Motorachse (32) und einen Motor (34) umfasst, wobei das Fahrzeug ferner ein Fahrzeug-Steuerungssystem (18) umfasst,
wobei jede Antriebslinie (30) wenigstens einen aktiven Betriebsmodus, in welchem die Motorachse (32) in Rotation durch den Motor (34) als Funktion einer von dem Motor (34) gelieferten Leistung angetrieben wird, und einen inaktiven Betriebsmodus aufweist, in welchem der Motor (34) die Achse (32) nicht in Rotation antreibt,
wobei das Steuerungssystem (18) dazu eingerichtet ist, die momentane Gesamtanzahl von Antriebslinien (30) des Triebwagens (12) in dem aktiven Modus zu einem gegebenen Zeitpunkt während einer Fortbewegung des Fahrzeugs zu bestimmen, und eine individuelle benötigte Antriebsleistung zu bestimmen, welche zu dem gegebenen Zeitpunkt von der momentanen Gesamtzahl von Antriebslinien (30) in dem aktiven Modus geliefert wird,
wobei das Steuerungssystem (18) dazu eingerichtet ist, den Übergang von wenigstens einer der Antriebslinien (30) des Triebwagens (12) von dem aktiven Modus zu dem inaktiven Modus zu steuern, und gleichzeitig die von dem Motor (34) von jeder in dem aktiven Modus verbleibenden Antriebslinie (30) gelieferte Leistung zu steuern, damit die Gesamtheit der einen oder mehreren verbleibenden Antriebslinien (30) in dem aktiven Modus die individuelle benötigte Antriebsleistung liefern,
**dadurch gekennzeichnet, dass** das Steuerungssystem (18) dazu eingerichtet ist, eine momentane Geschwindigkeit des Schienenfahrzeugs (10) zu dem gegebenen Zeitpunkt aufzunehmen, um eine maximale individuelle Leistung zu bestimmen, welche von dem Triebwagen (12) bei der momentanen Geschwindigkeit mit einer Anzahl von Antriebslinien (30) in dem aktiven Modus geliefert werden kann, welche kleiner als die momentane Gesamtanzahl ist, wobei das Steuerungssystem (18) dazu eingerichtet ist, den Übergang wenigstens zu steuern, wenn die individuelle benötigte Antriebsleistung kleiner als die maximale individuelle Leistung ist,
und dadurch, dass das Steuerungssystem (18) dazu eingerichtet ist, den Übergang wenigstens zu steuern, wenn die momentane Geschwindigkeit größer als eine vorbestimmte Schwellenwert-Geschwindigkeit ungleich null ist, wobei das Steuerungssystem (18) vorzugsweise dazu eingerichtet ist, den Übergang von allen der Antriebslinien (30) des Triebwagens (12) in den aktiven Modus zu steuern, wenn die momentane Geschwindigkeit des Schienenfahrzeugs (10) unterhalb der Schwellenwert-Geschwindigkeit liegt.

2. Fahrzeug (10) nach Anspruch 1, wobei das Steuerungssystem (18) dazu eingerichtet ist, den Übergang wenigstens zu steuern, wenn die individuelle benötigte Antriebsleistung kleiner als die maximale individuelle Leistung um wenigstens einen vorbestimmten Schwellenwert ungleich null ist.

3. Fahrzeug (10) nach einem der vorhergehenden Ansprüche, wobei jede Antriebslinie (30) des Triebwagens (12), deren Übergang von dem aktiven Modus zu dem inaktiven Modus gesteuert wird, unter allen der Antriebslinien (30) des Wagens (12) in dem aktiven Modus zu dem gegebenen Zeitpunkt als Funktion von wenigstens einem vorbestimmten Auswahlkriterium ausgewählt wird.

4. Fahrzeug (10) nach Anspruch 3, wobei das Steuerungssystem (18) dazu eingerichtet ist, für jede Antriebslinie (30) des Wagens (12) in dem aktiven Modus einen Betriebsstatus der Antriebslinie (30) zu bestimmen, welcher wenigstens ausgewählt wird unter einem normalen Status und einem verschlechterten Status, wobei das vorbestimmte Auswahlkriterium von wenigstens dem Betriebsstatus von jeder Antriebslinie (30) abhängt; und/oder wobei das Steuerungssystem (18) dazu eingerichtet ist, für jede Antriebslinie (30) des Wagens (12) einen Parameter zu bestimmen, welcher die Betriebsdauer der Antriebslinie (30) repräsentiert, wobei das vorbestimmte Auswahlkriterium von wenigstens einer Ordnungsbeziehung auf den Parameter von jeder Antriebslinie (30) in dem aktiven Modus abhängt.

5. Fahrzeug (10) nach Anspruch 4, wobei jeder Triebwagen (12) Drehgestelle (24) umfasst, wobei jedes Drehgestell (24) wenigstens eine der Antriebslinien (30) des Wagens (12) trägt, wobei das vorbestimmte Auswahlkriterium von wenigstens dem Beibehalten von wenigstens einer Antriebslinie (30) in dem aktiven Modus durch das Drehgestell (24) des Wagens (12) abhängt.

6. Fahrzeug (10) nach einem der vorhergehenden Ansprüche, wobei das Steuerungssystem (18) ebenfalls dazu eingerichtet ist, den Übergang in den aktiven Modus von wenigstens einer der Antriebslinien (30) des Triebwagens (12) zu steuern, welche zuvor von dem aktiven Modus zu dem inaktiven Modus übergegangen ist, als Funktion einer neuen individuellen benötigten Antriebsleistung; wobei das Steuerungssystem (18) anschließend dazu eingerichtet ist, die Steuerung des Übergangs in den inaktiven Modus von wenigstens einer der Antriebslinien (30) des Triebwagens (12) um eine vorbestimmte Zeitperiode zu verzögern, welche zuvor von dem inaktiven Modus in den aktiven Modus übergegangen ist.

7. Fahrzeug (10) nach einem der vorhergehenden Ansprüche, umfassend wenigstens zwei Triebwagen (12), wobei jeder Triebwagen (12) wenigstens eine aktive Betriebskonfiguration, in welcher wenigstens eine der Antriebslinien (30) des Wagens (12) in dem aktiven Modus ist, und eine inaktive Betriebskonfiguration aufweist, in welcher alle der Antriebslinien (30) des Wagens (12) in dem inaktiven Modus sind,
wobei das Steuerungssystem (18) dazu eingerichtet ist, die momentane Gesamtanzahl von Triebwägen (12) in der aktiven Konfiguration zu einem gegebenen Zeitpunkt während einer Fortbewegung des Fahrzeugs (10) zu bestimmen, und eine globale benötigte Antriebsleistung zu bestimmen, welche von dem Schienenfahrzeug (10) zu dem gegebenen Zeitpunkt ausgegeben wird, wobei das Steuerungssystem (18) dazu eingerichtet ist, den Übergang von wenigstens einem der Triebwägen (12) von der aktiven Konfiguration zu der inaktiven Konfiguration zu steuern und gleichzeitig die von jedem Triebwagen (12) ausgegebene Leistung zu steuern, welcher in der aktiven Konfiguration verbleibt, damit die Gesamtheit des oder der Triebwägen, welche in der aktiven Konfiguration verbleiben, die globale benötigte Antriebsleistung liefert.

8. Verfahren zum Steuern eines Schienenfahrzeugs (10), wobei das Schienenfahrzeug (10) wenigstens einen Triebwagen (12) umfasst, wobei jeder Triebwagen (12) wenigstens zwei Antriebslinien (30) umfasst, wobei jede Antriebslinie (30) entsprechend wenigstens eine Motorachse (32) und einen Motor (34) umfasst, wobei das Fahrzeug ferner ein Fahrzeug-Steuerungssystem (18) umfasst,
wobei jede Antriebslinie (30) wenigstens einen aktiven Betriebsmodus, in welchem die Motorachse (32) in Rotation durch den Motor (34) als Funktion einer von dem Motor (34) gelieferten Leistung angetrieben wird, und einen inaktiven Betriebsmodus aufweist, in welchem der Motor (34) die Achse (32) nicht in Rotation antreibt,
wobei das Verfahren die folgenden Schritte umfasst:
- Bestimmen der momentanen Gesamtanzahl von Antriebslinien (30) des Triebwagens (12) in dem aktiven Modus zu einem gegebenen Zeitpunkt während einer Fortbewegung des Fahrzeugs (10),
- Bestimmen einer individuellen benötigten Antriebsleistung, welche zu dem gegebenen Zeitpunkt von der momentanen Gesamtzahl von Antriebslinien (30) in dem aktiven Modus des Triebwagens (12) geliefert wird,
- Steuern des Übergangs von wenigstens einer der Antriebslinien (30) des Triebwagens (12) von dem aktiven Modus zu dem inaktiven Modus und gleichzeitig Steuern der von dem Motor (34) von jeder in dem aktiven Modus verbleibenden Antriebslinie (30) gelieferten Leistung des Triebwagens (12), damit die Gesamtheit der einen oder mehreren verbleibenden Antriebslinien (30) in dem aktiven Modus die individuelle benötigte Antriebsleistung liefern,
wobei das Verfahren **dadurch gekennzeichnet ist, dass** es ferner die Schritte umfasst, bestehend aus:
- Aufnehmen einer momentanen Geschwindigkeit des Schienenfahrzeugs (10) zu dem gegebenen Zeitpunkt und Bestimmen einer maximalen individuellen Leistung, welche von dem Triebwagen (12) bei der momentanen Geschwindigkeit mit einer Anzahl von Antriebslinien (30) in dem aktiven Modus geliefert werden kann, welche kleiner als die momentane Gesamtanzahl ist, wobei das Steuerungssystem (18) dazu eingerichtet ist, den Übergang wenigstens zu steuern, wenn die individuelle benötigte Antriebsleistung kleiner als die maximale individuelle Leistung ist, und
- Steuern des Übergangs wenigstens, wenn die momentane Geschwindigkeit größer als eine vorbestimmte Schwellenwert-Geschwindigkeit ungleich null ist, und vorzugsweise Steuern des Übergangs von allen der Antriebslinien (30) des Triebwagens (12) in den aktiven Modus, wenn die momentane Geschwindigkeit des Schienenfahrzeugs (10) unterhalb der Schwellenwert-Geschwindigkeit liegt.

## Claims

1. Railway vehicle (10) comprising at least one motor coach (12), each motor coach (12) including at least two traction lines (30), each traction line (30) comprising at least one respective drive axle (32) and one motor (34), the vehicle also comprising a control system (18) for the vehicle,
each traction line (30) having at least one active mode of operation, in which the drive axle (32) is rotated by the motor (34) based on a power supplied by the motor (34), and an inactive mode of operation, in which the motor (34) does not rotate the axle (32),
the control system (18) being configured to determine the current total number of traction lines (30) of the motor coach (12) in the active mode, at a given moment during a movement of the vehicle, and to determine an individual required traction power provided, at the given moment, by the current total number of traction lines (30) in the active mode,
the control system (18) being configured to control the transition of at least one of the traction lines (30) of the motor coach (12) from active mode to inactive mode, and to simultaneously control the power supplied by the motor (34) of each traction line (30) that remains in active mode, so that all remaining traction line(s) (30) in active mode provide said required individual traction power,
**characterised in that** the control system (18) is configured to acquire a current speed of the rail vehicle (10) at the given moment, and to determine a maximum individual power that can be supplied by the motor coach (12) at said current speed, with a number of traction line(s) (30) in the active mode being less than the current total number, the control system (18) being configured to control said transition at least if the required individual traction power is less than said maximum individual power,
and **in that** the control system (18) is configured to control said passage at least if the current speed is greater than a predetermined non-zero threshold speed, the control system (18) being preferably configured to control the transition of all the traction lines (30) of the motor coach (12) to the active mode, when the current speed of the rail vehicle (10) is below said threshold speed.

2. Vehicle (10) according to claim 1, wherein the control system (18) is configured to control said transition at least if the required individual traction power is less than said maximum individual power by at least a predetermined non-zero threshold.

3. Vehicle (10) according to either one of the preceding claims, wherein each traction line (30) of the motor coach (12), whose transition from active mode to inactive mode is controlled, is selected from all the traction lines (30) of the coach (12) in active mode at the given moment, based on at least one predetermined selection criterion.

4. Vehicle (10) according to claim 3, wherein the control system (18) is configured to determine, for each traction line (30) of the coach (12) in active mode, an operational status of the traction line (30), which is at least selected from a normal status and a degraded status, with the predetermined selection criterion depending at least on the operational status of each traction line (30); and/or wherein the control system (18) is configured to determine, for each traction line (30) of the coach (12), a parameter representative of the operational duration of the traction line (30), with the predetermined selection criterion depending at least on an order relationship concerning said parameter of each traction line (30) in active mode.

5. Vehicle (10) according to claim 4, wherein each motor coach (12) comprises bogies (24), each bogie (24) carrying at least one of the traction lines (30) of the coach (12), with the predetermined selection criterion depending at least on the maintenance of at least one traction line (30) in active mode per bogie (24) of the coach (12).

6. Vehicle (10) according to any one of the preceding claims, wherein the control system (18) is also configured to control the transition to the active mode of at least one of the traction lines (30) of the motor coach (12) that previously transitioned from active mode to inactive mode based on a newly required individual traction power; the control system (18) being subsequently configured to delay for a predetermined time period the command to transition to the inactive mode of at least one of the traction lines (30) of the motor coach (12) that previously transitioned from inactive mode to active mode.

7. Vehicle (10) according to any one of the preceding claims, comprising at least two motor coaches (12), each motor coach (12) having at least one active operating configuration wherein at least one of the traction lines (30) of the coach (12) is in active mode, and an inactive operating configuration wherein all the traction lines (30) of the coach (12) are in inactive mode,
wherein the control system (18) is configured to determine the current total number of motor coaches (12) in the active configuration, at a given time during a movement of the vehicle (10), and to determine a required total traction power used by the rail vehicle (10) at the given time,
the control system (18) being configured to control the transition of at least one of the motor coaches (12) from the active configuration to the inactive configuration and to conjointly control the power supplied by each motor coach (12) that remains in the active configuration, so that all the remaining motor coach or coaches in the active configuration supply said required total traction power.

8. Method for controlling a railway vehicle (10), the railway vehicle (10) comprising at least one motor coach (12), each motor coach (12) comprising at least two traction lines (30), each traction line (30) comprising at least one respective drive axle (32) and a motor (34), the vehicle also comprising a control system (18) for the vehicle,
each traction line (30) having at least one active mode of operation, in which the drive axle (32) is rotated by the motor (34) based on a power supplied by the motor (34), and an inactive mode of operation, in which the motor (34) does not rotate the axle (32),
the method comprising the following steps:
- determining the current total number of traction lines (30) of the motor coach (12) in active mode, at a specific moment during the movement of the vehicle (10),
- determining a required individual traction power supplied, at the given moment, by the current total number of traction lines (30) in the active mode of the motor coach (12),
- controlling the transition of at least one of the traction lines (30) of the motor car (12) from active mode to inactive mode and, conjointly, controlling the power supplied by the motor (34) of each traction line (30) that remains in active mode in the motor car (12), so that all remaining traction line(s) (30) in active mode provide said required individual traction power,
the method being **characterised in that** it furthermore includes the steps consisting in:
- acquiring a current speed of the rail vehicle (10) at the given moment, and determining a maximum individual power that can be provided by the motor coach (12) at said current speed, with a number of traction line(s) (30) in the active mode that is lower than the current total number, the control system (18) being configured to control the transition at least if the required individual traction power is less than said maximum individual power; and
- controlling the transition at least if the current speed exceeds a predetermined non-zero threshold speed and, preferably, controlling the transition of all the traction lines (30) of the motor coach (12) in active mode when the current speed of the rail vehicle (10) is below said threshold speed.
